# EUROPEAN PATENT APPLICATION

(11) **EP 4 564 553 A1**
(43) Date of publication of application: **04.06.2025**
(21) Application number: 22969826.1
(22) Date of filing: 30.12.2022
(51) Int. Cl.: H01M 50/209

(54) **BATTERY AND ELECTRIC DEVICE**

(71) Applicant: Contemporary Amperex Technology (Hong Kong) Limited, Hong Kong (HK)
(72) Inventor: JIN, Haizu, Ningde, Fujian 352100 (CN); LI, Xiao, Ningde, Fujian 352100 (CN); YE, Yonghuang, Ningde, Fujian 352100 (CN)
(74) Representative: Laufhütte, Dieter
(86) International application number: PCT/CN2022/144156
(87) International publication number: WO 2024/138684

(57) **Abstract**

The present disclosure provides a battery (2000) and an electric device. The battery (2000) includes a plurality of battery cells (100). Each of the plurality of battery cells (100) has an electrode assembly (20). The electrode assembly (20) includes a main portion (21) and a tab (22). Center lines of main portions (21) of two adjacent battery cells (100) of the plurality of battery cells (100) are offset.

## Description

### FIELD

The present disclosure relates to the field of batteries, and in particularly, to a battery and an electric device.

### BACKGROUND

Energy conservation and emission reduction are critical to sustainable development of automobile industry, and electric vehicles have become an important part of the sustainable development of the automobile industry due to their energy conservation and environmental protection advantages. For electric vehicles, battery technology is a significant factor for their development.

A plurality of battery cells in the battery are stacked. During use for charging and discharging of the battery cell, a middle part of the battery cell is easy to expand, and superposition of an expansion force of the battery cell will seriously affect performance of the battery cell.

### SUMMARY

In view of the above problems, the present disclosure provides a battery and an electric device, which can alleviate an effect of an expansion force of the battery cell on performance of the battery and stability of a battery structure during use of the battery.

According to a first aspect, the present disclosure provides a battery, including: a plurality of battery cells. Each of the plurality of battery cells has an electrode assembly including a main portion and a tab, and center lines of main portions of two adjacent battery cells of the plurality of battery cells are offset.

In the technical solution according to embodiments of the present disclosure, the center lines of the main portions of the two adjacent battery cells are offset, which can reduce location of expansion centers of the plurality of battery cells at a same line, and further effectively relieves the concentration of expansion force caused by superposition of the plurality of battery cells, thereby reducing expansion of the battery during its charging and discharging, relieving an effect of the expansion force on ion shuttle in the middle of the battery, reducing problems of compressional deformation of a battery case body by the expansion force and the like, and improving the performance of the battery. Meanwhile, a reserved expansion space between adjacent battery cells can be reduced, an energy density loss of the battery is lowered, and use performance of the battery is further improved.

In some embodiments, a center line of the main portion of the battery cell is perpendicular to a surface with a largest area of the electrode assembly. In the above technical solution, an expansion amount of the battery cells on the large surface of the electrode assembly is great. When the battery cells are stacked, an expansion force of the battery cells perpendicular to the large surface is large, and by allowing center lines of main portions of battery cells in this direction to be offset, the problem of concentration of the expansion force can be relieved as much as possible, the expansion force of the whole battery is reduced, and structural stability of the battery is improved.

In some embodiments, the battery includes a plurality of first battery units and a plurality of second battery units. The plurality of first battery units and the plurality of second battery units are arranged alternately in a first direction. Each of the plurality of first battery units includes at least one battery cell, and each of the plurality of second battery units includes at least one battery cell. A center line of a main portion of the at least one battery cell in each of the plurality of first battery units and a center line of a main portion of the at least one battery cell in each of the plurality of second battery units are offset. In the above technical solution, one or more battery cells are arranged in each battery unit, and the first battery unit and the second battery unit are arranged alternately to form the battery, i.e., the battery is formed by alternate stacking of the two kinds of battery units, and center lines of main portions of adjacent battery cells in the two adjacent battery units are offset. Therefore, dispersion of the expansion force can be realized, and a problem of poor battery performance caused by concentration of the expansion force can be reduced. Moreover, compared with providing three or more battery units, on the basis of relieving the concentration of the expansion force, a type of the battery cells in the battery can be reduced, and assembly of the battery can be facilitated simultaneously.

In some embodiments, in a second direction, each of the plurality of first battery units has a same height as each of the plurality of second battery units, and end surfaces of the plurality of first battery units are flush with end surfaces of the plurality of second battery units. The second direction is perpendicular to the first direction. In the above technical solution, the plurality of battery units in the battery are arranged at a same level, thereby being beneficial to an improvement in an energy density of the battery.

In some embodiments, a number of the at least one battery cell in the plurality of first battery units is different from a number of the at least one battery cell in the plurality of second battery units. In the above technical solution, by providing different numbers of battery cells in the two battery units, realization of the misalignment of the center lines of the main portion of the electrode assembly is beneficial, which further alleviates concentration of the expansion force at a same position of the battery, improves the performance and structural stability of the battery, and further prolongs a service life of the battery.

In some embodiments, each of the plurality of first battery units includes one battery cell, and each of the plurality of second battery units includes a plurality of battery cells arranged in the second direction. The second direction is perpendicular to the first direction. In the above technical solution, the first battery unit is provided with one battery cell, and the second battery unit is provided with a plurality of battery cells. In this way, the center lines of the main portions of the adjacent battery cells are offset, the dispersion of the expansion force is achieved, and a case where the expansion force is concentrated at the same position is reduced. Meanwhile, only one battery cell is arranged in the first battery unit, so that the number of battery cells is further reduced, and assembly is facilitated.

In some embodiments, each of the plurality of first battery units includes a first battery cell, and each of the plurality of second battery units includes two second battery cells. A height of the first battery cell is twice a height of each of the two second battery cells in the second direction. In the above technical solution, an expansion force after the plurality of battery units is superposed is reduced as much as possible, so that the expansion force in the middle of the battery can be effectively reduced, and an overall deformation and expansion amount of the battery is lowered. Meanwhile, a deformation amount at a position where an end of the battery unit is located is small, which can reduce stretching of an electric connection member and improve reliability of the connection. Moreover, the second battery unit includes two same battery cells, which can further reduce the type of the battery cell and facilitate the assembly of the battery cell. Meanwhile, the height of the first battery cell is twice heights of the two second battery cells, allowing the heights of the two battery cells to be the same, i.e., the plurality of battery units in the battery are arranged at the same level, thereby being beneficial to an improvement in the energy density of the battery.

In some embodiments, each of the plurality of first battery units includes a battery cell, and each of the plurality of second battery units includes two battery cells. An electrode terminal of a battery cell of the two battery cells of the plurality of second battery units is located at an end of the battery cell away from the other battery cell of the two battery cells of the plurality of second battery units. In the above technical solution, the two battery cells can abut and cooperate with each other, which can improve stability of the cooperation between the two battery cells. Meanwhile, a space between the two battery cells can be reduced, and the waste of the space in the battery is reduced, which is beneficial to an improvement in the energy density of the battery.

In some embodiments, the two battery cells of the plurality of second battery units are bonded to each other. In the above technical solution, the bonding of the two battery cells can improve stability of the two battery cells, occupies a small space, and is beneficial to an improvement in the energy density of the battery.

In some embodiments, an electrode terminal of a battery cell of a first battery unit of the plurality of first battery units is arranged at an end surface of the first battery unit in the second direction. In the above technical solution, the two electrode terminals of the first battery unit may be located at a same end surface or located at two end surfaces, respectively. The electrode terminal of the first battery unit is arranged at the end surface, which is beneficial to an electrical connection of the first battery unit.

In some embodiments, an electrode terminal of the at least one battery cell of a first battery unit of the plurality of first battery units is arranged at a side surface of the first battery unit in the second direction. An electrode terminal of the at least one battery cell of a second battery unit of the plurality of second battery units is arranged at a side surface of the second battery unit in the second direction, and the electrode terminal of the first battery unit and the electrode terminal of the second battery unit are located at a same side. The second direction is perpendicular to the first direction. In the above technical solution, the electrode terminal of each battery cell is arranged at the side surface, so that the electrode terminals of the plurality of battery cells are located at the same side surface, thereby facilitating a connection between the electrode terminal and the electric connection member. Meanwhile, only a space at one side needs to be occupied to improve the energy density of the battery.

In some embodiments, each of the plurality of first battery units includes one first battery cell, and each of the plurality of second battery units includes one third battery cell. A height of the one first battery cell is greater than a height of the one third battery cell. In the above technical solution, each battery unit includes one battery cell. Since the two battery cells have different heights, center misalignment of the main portions of two adjacent battery cells is realized, which realizes the dispersion of the expansion force and reduces the concentration of the expansion force at the same position. Meanwhile, only one battery cell is provided in each battery unit, which further reduces the number of battery cells and facilitates assembly.

In some embodiments, in a direction in which the plurality of first battery units and the plurality of second battery units are arranged, battery cells at two ends are the same and are first battery cells. In the above technical solution, fixing of the plurality of battery units is facilitated, and the assembly stability of the plurality of battery units is improved.

In some embodiments, each of the plurality of battery cells includes a housing. The electrode assembly is arranged in the housing. Housings of the two adjacent battery cells of the plurality of battery cells have a same size, and electrode assemblies of the two adjacent battery cells have different heights.

In some embodiments, the plurality of battery cells have a same capacity. In the above technical solution, charging and discharging control is facilitated to be performed on the battery cell, a complexity degree of a control system is lowered, and a manufacturing cost is lowered.

In some embodiments, a center line of a main portion of the electrode assembly extends in a direction in which the plurality of battery cells are arranged. In the above technical solution, the center line of the main portion of the electrode assembly extends in the direction in which the plurality of battery cells are arranged, so that parts of the battery cells with great expansion amount in the direction in which the plurality of battery cells are arranged are offset, and the concentration of the expansion force caused by the superposition of the plurality of battery cells is further relieved. Therefore, the expansion of the battery during charging and discharging is reduced, potential safety hazards caused by compression of the battery case body are reduced, and the safety performance of the battery is improved.

According to a second aspect, the present disclosure provides an electric device, including the battery according to the above embodiments. The battery is configured to supply power.

The above description is only an overview of the technical solutions of the present disclosure. In order to more clearly understand the technical means of the present disclosure to implement same according to the contents of the description, and in order to make the above and other objectives, features and advantages of the present disclosure more obvious and understandable, specific implementations of the present disclosure are exemplarily described below.

### BRIEF DESCRIPTION OF THE DRAWINGS

Various other advantages and benefits will become apparent to those skilled in the art after reading the detailed description of preferred implementations given below. The accompanying drawings are used for a purpose of illustrating the preferred implementations only, rather than limiting the present disclosure. Moreover, throughout the accompanying drawings, same elements are denoted by same reference numerals. In the accompanying drawings:
FIG. 1 is a schematic view of an electric device in the related art.
FIG. 2 is a schematic view of a battery in the related art.
FIG. 3 is a schematic view of a battery cell according to some embodiments of the present disclosure.
FIG. 4 is a schematic view of a battery cell according to some other embodiments of the present disclosure.
FIG. 5 is a partially schematic view of a battery according to some embodiments of the present disclosure.
FIG. 6 is a schematic cross-sectional view of a battery according to some embodiments of the present disclosure.
FIG. 7 is a schematic cross-sectional view of a battery according to some other embodiments of the present disclosure.
FIG. 8 is a partially schematic view of a battery according to some other embodiments of the present disclosure.
FIG. 9 is a schematic cross-sectional view of a battery according to yet some other embodiments of the present disclosure.
FIG. 10 is a schematic cross-sectional view of a battery according to yet some other embodiments of the present disclosure.

Reference numerals:
vehicle 1000, controller 200, motor 300, battery 2000, case body 400, first portion 410, second portion 420, electric connection member 500,
battery cell 100, first battery unit 101, second battery unit 102,
first battery cell 11, second battery cell 12, third battery cell 13,
electrode assembly 20, main portion 21, tab 22,
electrode terminal 30,
housing 40, casing 41, end cover 42,
current collection member 50.

### DETAILED DESCRIPTION

In order to make the objects, technical solutions, and advantages of embodiments of the present disclosure more apparent, technical solutions according to the embodiments of the present disclosure will be clearly described below in combination with accompanying drawings of the embodiments of the present disclosure. Obviously, the embodiments described below are only a part of the embodiments of the present disclosure, rather than all the embodiments. Based on the embodiments of the present disclosure, other embodiments obtained by those of ordinary skill in the art without creative labor are within scope of the present disclosure.

Unless otherwise defined, all technical and scientific terms used in the present disclosure have the same meanings as commonly understood by those skilled in the art of the present disclosure. The terms used in the specification of the present disclosure are only for describing specific embodiments and are not intended to limit the present disclosure. The terms "including," "having," and any variations thereof in the specification, claims, and the above description of the drawings of the present disclosure are intended to cover non-exclusive inclusion. The terms "first," "second," etc. in the specification, claims, or the above description of the drawings of the present disclosure are used to distinguish different objects, rather than to describe a specific order or a primary-secondary relationship.

Reference herein to "an embodiment" means that a particular feature, structure, or characteristic described in connection with the embodiments can be included in at least one embodiment of the present disclosure. The appearances of this phrase in various places in the specification are not necessarily all referring to the same embodiment, nor are separate or alternative embodiments mutually exclusive of other embodiments.

In the description of the present disclosure, it should be noted that, unless otherwise clearly specified and limited, terms such as "install," "connect," "connect to," and "attach to" should be understood in a broad sense. For example, it may be a fixed connection or a detachable connection or connection as one piece; direct connection or indirect connection through an intermediate or internal connection between two elements. For those of ordinary skill in the art, the specific meaning of the above-mentioned terms in the present disclosure can be understood according to specific circumstances.

The term "and/or" in the present disclosure is merely an association relationship describing related objects, indicating that there may exist three relationships, for example, A and/or B, which may mean: A exists alone, A and B exist simultaneously, and B exists alone. In addition, the character *"*/*"* in the present disclosure generally indicates that the related objects are in an "or" relationship.

In the embodiments of the present disclosure, the same reference numerals represent the same components, and for the sake of simplicity, detailed descriptions of the same components in different embodiments are omitted. It should be understood that the thickness, length, width and other dimensions of various components in the embodiments of the present disclosure shown in the drawings, as well as the overall thickness, length and width of the integrated device, are only exemplary illustrations and should not constitute any limitation to the present disclosure.

The term "a plurality of" appearing in the present disclosure refers to two or more (including two).

The battery mentioned in the embodiments of the present disclosure refers to a single physical module including one or more battery cells to provide a higher voltage and capacity. When a plurality of battery cells is provided, the plurality of battery cells may be connected in series, in parallel, or in series and parallel through an electric connection member.

In some embodiments, the battery may be a battery module. When a plurality of battery cells is provided, the plurality of battery cells are arranged and fixed to form one battery module.

In some embodiments, the battery may be a battery pack, and the battery pack includes a case body and a battery cell. The battery cell or the battery module is accommodated in the case body.

In some embodiments, the case body may be part of a chassis structure of a vehicle. For example, a part of the case body may be at least a part of a floor of the vehicle or be at least a part of a transverse beam and a longitudinal beam of the vehicle.

In some embodiments, the battery may be an energy storage device. The energy storage device includes an energy storage container, an energy storage cabinet, and the like.

In this embodiment of the present disclosure, the battery cell may be a secondary battery. The secondary battery refers to a battery cell that, after being discharged, can activate active materials by charging for continuous use.

The battery cell may be a lithium ion battery, a sodium ion battery, a sodium lithium ion battery, a lithium metal battery, a sodium metal battery, a lithium-sulfur battery, a magnesium ion battery, a nickel-hydrogen battery, a nickel-cadmium battery, a lead storage battery, or the like, which is not limited in the embodiments of the present disclosure.

The battery cell generally includes an electrode assembly. The electrode assembly includes a positive electrode, a negative electrode, and a separator. During charging and discharging of the battery cell, active ions (such as lithium ions) are intercalated and deintercalated back and forth between the positive electrode and the negative electrode. The separator is disposed between the positive electrode and the negative electrode and may play a role in preventing a short circuit between the positive electrode and the negative electrode while allowing the active ions to pass through.

In some embodiments, the positive electrode may be a positive plate, and the positive plate may include a positive current collector and a positive active material disposed at at least one surface of the positive current collector.

As an example, the positive current collector has two surfaces opposite in its own thickness direction, and the positive active material is disposed at either or both of the two opposite surfaces of the positive current collector.

As an example, the positive current collector may be a metal foil or a composite current collector. For example, as the metal foil, aluminum or stainless steel treated with a silver surface, stainless steel, copper, aluminum, nickel, charcoal electrodes, carbon, nickel, or titanium may be used. The composite current collector may include a high molecular material substrate layer and a metal layer. The composite current collector may be formed by forming a metal material (aluminum, aluminum alloy, nickel, nickel alloy, titanium, titanium alloy, silver and silver alloy, and the like) on a high molecular material substrate (such as a polypropylene (PP), polyethylene terephthalate (PET), polybutylene terephthalate (PBT), polystyrene (PS), or polyethylene (PE) substrate).

As an example, the positive active material may include at least one of the following materials: a lithium-containing phosphate, a lithium transition metal oxide, and respective modified compounds. However, the present disclosure is not limited to these materials, and other conventional materials used as positive active materials for batteries may also be used.

In some embodiments, the negative electrode may be a negative plate, and the negative plate may include a negative current collector.

As an example, the negative current collector may be a metal foil or a composite current collector. For example, as a metal foil, aluminum or stainless steel treated with silver surfaces, stainless steel, copper, aluminum, nickel, charcoal electrodes, carbon, nickel, or titanium may be used.

In some embodiments, the negative current collector has two surfaces opposite in its own thickness direction.

In some implementations, the separation member is a separator. The type of the separator is not particularly limited in the present disclosure, and any well-known separator with a porous structure having good chemical stability and mechanical stability may be selected.

As an example, the main material of the separator may be selected from at least one of glass fiber, non-woven fabric, polyethylene, polypropylene, polyvinylidene fluoride, and ceramic. The separator may be a single-layer thin film or a multi-layer composite film and is not particularly limited. When the separator is a multi-layer composite film, the material of each layer may be the same or different, which is not particularly limited. The separator may be a separate component located between the positive electrode and the negative electrode or may be attached to surfaces of the positive electrode and the negative electrode.

In some implementations, the separator is a solid electrolyte. The solid electrolyte is disposed between the positive electrode and the negative electrode, and functions to transport ions and isolate the positive electrode from the negative electrode.

In some implementations, the electrode assembly is a winding structure. The positive plate and the negative plate are wound into a winding structure.

In some implementations, the electrode assembly is a stacking structure.

In some implementations, the battery cell may include a housing. The housing is configured to encapsulate components such as an electrode assembly and an electrolyte. The housing may be a steel shell, an aluminum shell, a plastic shell (such as polypropylene), a composite metal shell (such as a copper-aluminum composite shell) or an aluminum-plastic film.

In some implementations, the housing includes an end cover and a casing. The casing has an opening. The end cover closes the opening to form a closed space for accommodating substances such as an electrode assembly and an electrolyte. The casing may have one or more openings. One or more end covers may also be provided.

In some implementations, at least one electrode terminal is disposed on the housing and is electrically connected to a tab of the electrode assembly. The electrode terminal may be directly connected to the tab or be indirectly connected to the tab through an adapter component. The electrode terminal may be disposed at the end cover or at the casing.

In some implementations, the housing is provided with an explosion-proof valve. The explosion-proof valve is configured to relief and discharge an internal pressure of the battery cell.

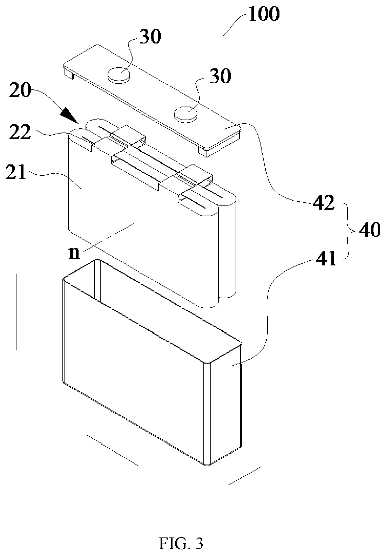

As an example, the battery cell may be a cylinder-shaped battery cell, a prismatic battery cell, a soft-pack battery cell, or battery cells in other shapes. The prismatic battery cell includes a square-shell battery cell, a blade-shaped battery cell, a multi-prism battery. The multi-prism battery, for example, is a hexagonal-prism battery, which is not particularly limited in the embodiments of the present disclosure. Referring to FIG. 3, in this embodiment of the present disclosure, a square-shell battery cell is used as an example.

During the charging and discharging of the battery, an expansion amount of a middle part of the battery cell is large, a large expansion force is correspondingly generated. The plurality of battery cells are stacked in sequence, and the expansion force is superposed to cause the expansion force to be concentrated in the middle of the battery cell, so that the expansion force during charging and discharging of the middle part of the battery greatly impacts on ion shuttling in the middle of the battery cell. Meanwhile, the expansion force is too large, which may cause problems of compressional deformation of the case body and the like, thereby affecting performance and structure stability of the battery and further lowering a service life of the battery. In the related art, a space is mainly reserved in advance between two adjacent battery cells, and structures such as a buffer pad can be provided simultaneously to reduce compression for the case body caused by the concentration of the expansion force. However, the reservation of the reserved space in advance will lose energy density.

In order to alleviate an effect of the expansion force of the battery cell on the performance and structure stability of the battery during use of the battery, the inventor finds that a structure of the battery can be improved. Specifically, the present disclosure provides a battery, including a plurality of battery cells. Each battery cell has an electrode assembly. The electrode assembly includes a main portion and a tab. Center line of main portions of two adjacent battery cells are offset.

In the battery with this structure, the center lines of the main portions of the two adjacent battery cells are offset, which can reduce location of expansion centers of the plurality of battery cells at a same line, and further effectively relieves the concentration of expansion force caused by superposition of the plurality of battery cells, thereby reducing expansion of the battery during its charging and discharging, reducing safety hazards caused by compression of the case body of the battery, and improving the performance of the battery. Meanwhile, a reserved expansion space between adjacent battery cells can be reduced, an energy density loss of the battery is lowered, and use performance of the battery is further improved.

The battery cell disclosed in the embodiments of the present disclosure may be configured to, but is not limited to, in an electric device such as a vehicle, a ship, or an aircraft, so that a power supply system of the electric device may consist of components including the battery disclosed in the present disclosure, to improve use safety and reliability of the electric device.

The embodiments of the present disclosure provide an electric device using the battery as a power source. The electric device may be, but are not limited to, a cell phone, a tablet, a laptop computer, an electric toy, an electric tool, an electric bicycle, an electric motorcycle, and an electric vehicle, a ship, a spacecraft, and the like. The electric toy may include a fixed electric toy or a mobile electric toy, e.g., a game console, an electric car toy, an electric ship toy, and an electric airplane toy. The spacecraft may include an airplane, a rocket, a space shuttle, a spaceship, or the like.

For ease of description, the following embodiments are described by using an example where an electric device is a vehicle according to an embodiment of the present disclosure.

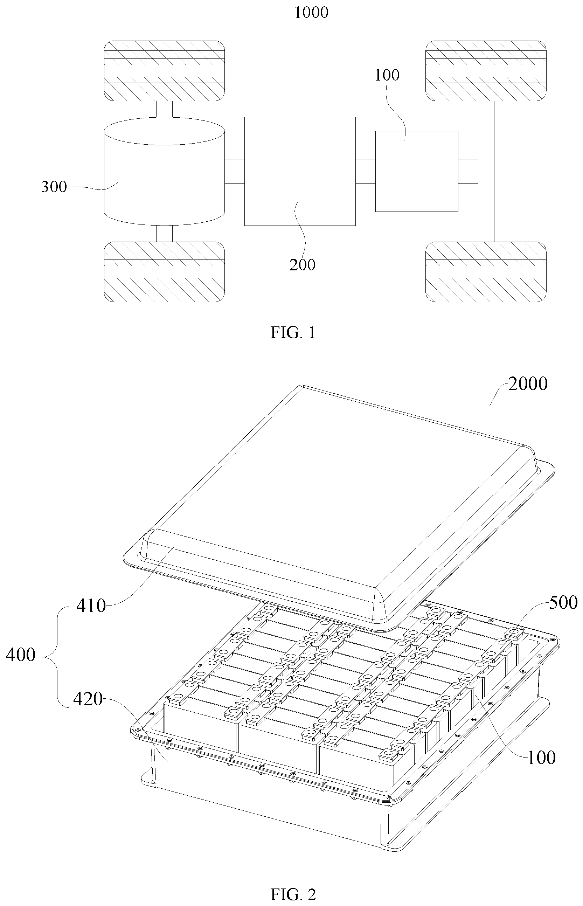

FIG. 1 is a schematic diagram showing a structure of the vehicle according to some embodiments of the present disclosure. Referring to FIG. 1, the vehicle 1000 may be a fuel vehicle, a gas vehicle, or a new energy vehicle. The new energy vehicle may be a battery electric vehicle, a hybrid electric vehicle, an extended range vehicle, or the like. A battery cell 100 is disposed in the vehicle 1000, and the battery cell 100 may be disposed at a bottom or a head or a tail of the vehicle 1000. The battery cell 100 can be configured to supply power to the vehicle 1000. For example, the battery cell 100 may be used as an operational power source of the vehicle 1000 for an electrical system of the vehicle 1000, such as an operational power demand for startup, navigation, and operation of the vehicle 1000.

The vehicle 1000 may further include a controller 200 and a motor 300. The controller 200 is configured to control the battery 100 to supply power to the motor 300, e.g., for operational power needs in starting, navigation, and traveling of the vehicle 1000.

In some embodiments of the present disclosure, the battery 100 may not only serve as an operational power source of the vehicle 1000, but also serve as a drive power source of the vehicle 1000 in lieu of, or in part in lieu of a fuel oil or a natural gas to provide drive power for the vehicle 1000.

FIG. 2 is an exploded view of a battery 2000 according to some embodiments of the present disclosure. Referring to FIG. 2, the battery 2000 includes a case body 400 and a battery cell 100 accommodated in the case body 400. The case body 400 provides an accommodation space for the battery cell 100, and may be in various structures. In some embodiments, the case body 400 may include a first portion 410 and a second portion 420 that cap each other. The first portion 410 and the second portion 420 together define the accommodation space for accommodating the battery cell 100. The second portion 420 may be in a hollow structure having an opening at one end thereof while the first portion 410 may be in a plate-like structure. The first portion 410 caps the second portion 420 at the opening side to enable the first portion 410 and the second portion 420 to define the accommodation space. Also, each of the first portion 410 and the second portion 420 may be in the hollow structure having an opening at one end thereof, and the first portion 410 at the opening side caps over the second portion 420 at the opening side. Of course, the case body 400 formed by the first portion 410 and the second portion 420 may be of various shapes, for example, a cylinder, a cuboid, and so on.

In the battery 2000, a plurality of battery cells 100 may be provided. The plurality of battery cells 100 may be connected in series or in parallel or in series and parallel. The expression "in series and parallel" means that the plurality of battery cells 100 are connected both in series and in parallel. The plurality of battery cells 100 may be directly connected in series or in parallel or in series and parallel, and then accommodated in the case body 400 as a whole. Of course, for the battery 2000, the plurality of battery cells 100 may be connected in series or in parallel or in series and parallel to form a battery module, and then a plurality of battery modules may be connected in series or in parallel or in series and parallel and accommodated in the case body 400 as a whole. The battery 2000 may further have other structures. For example, the battery 2000 may further include a busbar. The busbar may be a plurality of electric connection members 500 and configured to implement an electrical connection between the plurality of battery cells 100.

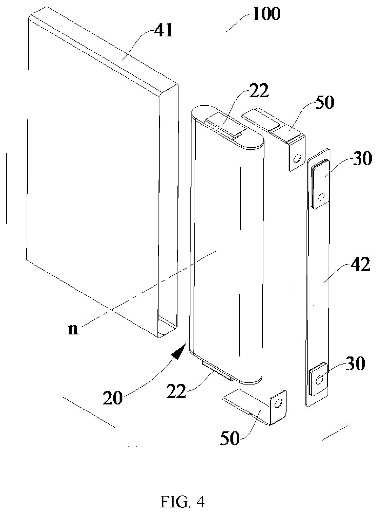

FIG. 3 is an exploded view of a structure of a battery cell 100 according to some embodiments of the present disclosure. FIG. 4 is an exploded view of a structure of a battery cell 100 according to some other embodiments of the present disclosure. Referring to FIG. 3 and FIG. 4, the battery cell 100 is the smallest unit that makes up the battery 2000. Referring to FIG. 3 and FIG. 4, the battery cell 100 includes an end cover 42, a casing 41, an electrode assembly 20, and other functional members, like a current collection member 50 in FIG. 4.

The end cover 42 is a member that covers an opening of the casing 41 to isolate an internal environment of the battery cell 100 from an external environment. Without limitation, a shape of the end cover 42 may be adapted to a shape of the casing 41 to cooperate with the casing 41. In some embodiments, the end cover 42 may be made of a material having a certain degree of hardness and strength (e.g., an aluminum alloy). In this way, the end cover 42 is less likely to deform when subjected to a compression and a collision, enabling the battery cell 100 to have a higher structural strength and improved safety performance. Functional members such as an electrode terminal 30 may be disposed on the end cover 42. The electrode terminal 30 can be configured to be electrically connected to the electrode assembly 20 to output or input electric energy of the battery cell 100. In some embodiments, a pressure relief mechanism may further be disposed on the end cover 42. The pressure relief mechanism is configured to release an internal pressure of the battery cell 100 when the internal pressure or a temperature of the battery cell 100 reaches a threshold. The end cover 42 may be made of a variety of materials, such as copper, iron, aluminum, stainless steel, aluminum alloy, and plastic. The embodiments of the present disclosure are not specifically limited to any of these examples. In some embodiments, an insulation member may also be disposed on an inner side of the end cover 42. The insulation member can be configured to isolate an electrical connection member in the casing 41 from the end cover 42, to reduce a short-circuit risk. For example, the insulation member may be made of plastic, rubber, or the like.

The casing 41 is an assembly cooperating with the end cover 42 to form the internal environment of the battery cell 100. The formed internal environment can accommodate the electrode assembly 20, the electrolyte, and other members. The casing 41 and the end cover 42 may be independent members. An opening may be formed on the casing 41. The internal environment of the battery cell 100 may be formed by covering the opening with the end cover 42. Without limitation, the end cover 42 and the casing 41 may also be integrally formed. In a further embodiment, a common connection surface may be formed with the end cover 42 and the casing 41 before other members are put into the housing. When an interior of the casing 41 is encapsulated, the end cover 42 is made to cover the casing 41. The casing 41 may be in various shapes and may have various dimensions, such as in a cuboid shape, in a cylinder shape, and in a hexagonal prism shape. In a further embodiment, the shape of the casing 41 may be determined based on a specific shape and dimension size of the electrode assembly 20. The casing 41 may be made of various materials, such as copper, iron, aluminum, stainless steel, aluminum alloy, and plastic. The embodiments of the present disclosure are not limited to any of these examples.

The electrode assembly 20 is a member, in the battery cell 100, where an electrochemical reaction occurs. One or more electrode assemblies 23 may be contained in the casing 41. The electrode assembly 20 is formed primarily by winding or laminating a positive plate and a negative plate. Typically, a separator is located between the positive plate and the negative plate. Portions of the positive plate and the negative plate that have or bear active substances form a main portion 21 of the electrode assembly 20. Portions of the positive plate and the negative plate that have or bear no active substances each form a tab 22. A positive electrode tab 22 and a negative electrode tab 22 may be both located at one end of the main portion 21, or may be located at two ends of the main portion 21, respectively. During charging and discharging of the battery 2000, ions in the active substance shuttle between the positive electrode and negative electrode. The tab 22 is connected to the electrode terminal 30 to form a current circuit.

As shown in FIG. 3, in some examples, the tab 22 of the electrode assembly 20 is located at an upper side of the main portion 21, and the end cover 42 is located above the electrode assembly 20, so that the electrode terminal 30 is located at an upper end of the battery cell 100, and the tab 22 is connected to the electrode terminal 30. As shown in FIG. 4, in some examples, the tab 22 of the electrode assembly 20 is located at the upper side of the main portion 21, and the end cover 42 is located at a right side of the electrode assembly 20. In this way, the electrode terminal 30 is located at a side surface of the battery cell 100, the tab 22 is connected to the electrode terminal 30 through the current collection member 50, and the current collection member 50 is bent to connect the tabs 22 at upper and lower end surfaces of the electrode assembly 20 to the electrode terminal 30 at the side surface of the battery cell 100.

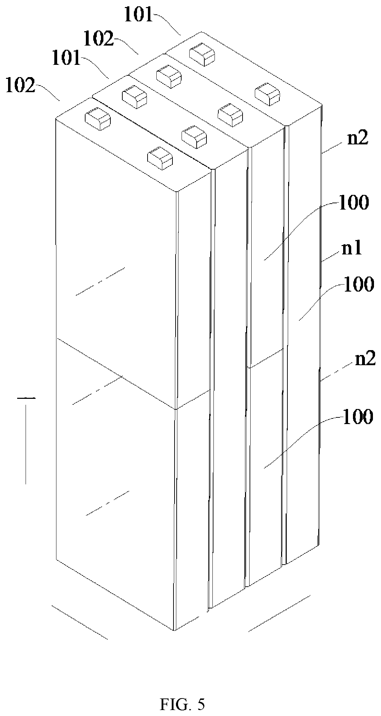

A partially schematic view of a battery 2000 according to some embodiments of the present disclosure is described below with reference to FIG. 5. As shown in FIG. 3 to FIG. 5, the battery 2000 includes a plurality of battery cells 100. Each battery cell 100 has an electrode assembly 20. The electrode assembly 20 includes a main portion 21 and a tab 22. Center lines n of main portions 21 of the two adjacent battery cells 100 are offset.

The main portion 21 is the portions of the positive plate and the negative plate that have or bear active substances, and the tab is the portions of the positive plate and the negative plate that have or bear no active substances. During the charging and discharging of the battery cell 100, an expansion amount of the battery cells 100 at two ends of the main portion 21 is small, an expansion amount of the battery cell 100 at a central position of the main portion 21 is large, especially at a position of the center line n of the main portion 21. Here, the center line n of the main portion 21 is located at a center of the main portion 21 in a height direction of the main portion 21 (like an up-down direction as shown in FIG. 3), and is located at a center of the main portion 21 in a width direction of the main portion 21 (like a left-right direction as shown in FIG. 3). The electrode assembly 20 is a multi-layer electrode plate structure. A connecting line of center points of electrode plate structures in each layer is the center line n. For example, the stacking structure is superposition of electrode plates in a plurality of layers. A part, not including the corner, of the winding structure also includes a multi-layer electrode plate structure.

The center lines of the main portions 21 of the two adjacent battery cells 100 are n1 and n1, and n1 and n2 are offset. Moreover, the center lines of the main portions 21 of the two adjacent battery cells 100 are offset from each other. In this way, parts with great expansion amount of the two adjacent battery cells 100 are offset, to reduce a case where the expansion centers of the plurality of battery cells 100 are located at the same line, and further alleviates the concentration of the expansion force caused by the superposition of the plurality of battery cells 100, thereby reducing the compression of the case body 400 of the battery 2000 and the like.

In the battery 2000, the center lines of the main portions 21 of the two adjacent battery cells 100 are offset from each other, which can be that center lines of main portions 21 of only one pair of adjacent battery cells 100 in the battery 2000 are offset from each other, and can also be that center lines of main portions 21 of many pairs of two adjacent battery cells 100 in the battery 2000 are offset from each other, i.e., center lines of main portions 21 of some of adjacent battery cells 100 in the battery cell 2000 are offset from each other. Certainly, it can also be that center lines of main portions 21 of any two adjacent battery cells 100 in the battery cell 2000 are offset from each other, thereby alleviating the problem of the concentration of expansion force caused by the superposition of the battery cells 100 as much as possible.

In the technical solution of the embodiments of the present disclosure, the center lines of the main portions 21 of the two adjacent battery cells 100 are offset, which can reduce the case where the expansion centers of the plurality of battery cells 100 are located at the same line, and further effectively alleviates the concentration of the expansion force caused by the superposition of the plurality of battery cells 100, thereby reducing the expansion of the battery 2000 during its charging and discharging, alleviating the effect of the expansion force on the ion shuttle in the middle of the battery 2000, reducing the problems of compressional deformation of the case body of the battery by the expansion force, and improving the performance of the battery 2000. Meanwhile, the reserved expansion space between adjacent battery cells 100 can be reduced, the energy density loss of the battery 2000 is lowered, and the use performance of the battery 2000 is further improved.

As shown in FIG. 3 and FIG. 4, in some embodiments, a center line n of the main portion 21 of the battery cell 100 is perpendicular to a surface with a largest area of the electrode assembly 20.

As shown in FIG. 3, some electrode assemblies 20 have two end surfaces and four side surfaces. The two opposite side surfaces in the four side surfaces have large areas, i.e., are large surfaces of the electrode assembly 20, and another two opposite side surfaces in the four side surfaces have small areas, i.e., are small surfaces of the electrode assembly 20. During expansion of the electrode assembly 20, an expansion amount of the large surface is great. When the plurality of battery cells 100 are stacked, there are great expansion forces at a position perpendicular to the large surface. Therefore, center lines n of main portions 21 in a direction perpendicular to the large surface are offset, so that the problem of the concentration of the expansion force can be relieved as much as possible, which reduces the expansion force of the whole battery 2000 and improves the structural stability of the battery 2000.

As shown in FIG. 5 to FIG. 9, in some embodiments, the battery 2000 includes a plurality of first battery units 101 and a plurality of second battery units 102. The plurality of first battery units 101 and the plurality of second battery units 102 are arranged alternately in a first direction. Each of the plurality of first battery units 101 includes at least one battery cell 100, and each of the plurality of second battery units 102 includes at least one battery cell 100. A center line of a main portion 21 of the at least one battery cell 100 in each of the plurality of first battery units 101 and a center line of a main portion 21 of the at least one battery cell 100 in each of the plurality of second battery units 102 are offset.

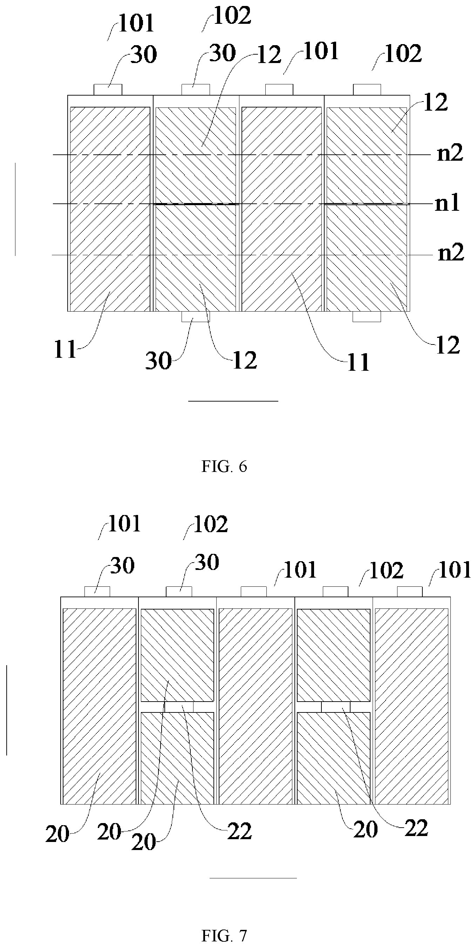

The first direction is a front-rear direction as shown in FIG. 5 and FIG. 6. As shown in FIG. 5 and FIG. 6, the plurality of first battery units 101 and the plurality of second battery units 102 are arranged alternately in the front-rear direction. One first battery unit 101 is provided between two adjacent second battery units 102, and one second battery unit 102 is provided between two adjacent first battery units 101. Therefore, the entire battery is composed of the first battery unit and the second battery unit. One or more battery cells 100 is provided in each battery cell. The battery 2000 is formed by alternately arranging and stacking the first battery unit and the second battery unit.

The center line of the main portion 21 of the battery cell 100 in each of the first battery units is n1, and the center line of the main portion of the battery cell in each of the second battery units is n2. The center line n1 and the center line n2 are not collinear and have different heights, thereby realizing dislocation of center lines of main portions 21 of adjacent battery cells 100 in the two adjacent battery units. Therefore, the dispersion of the expansion force is realized, and the problem of poor performance of the battery 2000 caused by the concentration of the expansion force is reduced. Moreover, compared with providing three or more battery units, the type of the battery cell 100 in the battery 2000 can be reduced on the basis of relieving the concentration of the expansion force, and meanwhile, the assembly of the battery 2000 is facilitated.

In some other examples, the battery 2000 may also include three or more battery units. By providing the plurality of battery units, the expansion force on the battery cell 100 can be further dispersed, such that the problem of poor performance of the battery 2000 caused by the concentration of the expansion force can be reduced as much as possible, and the performance of the battery 2000 is improved.

As shown in FIG. 6 and FIG. 7, in some embodiments, in a second direction, the first battery unit 101 has a same height as the second battery unit 102, and end surfaces of the first battery units 101 are flush with end surfaces of the second battery units 102. The second direction is perpendicular to the first direction.

The second direction is an up-down direction as shown in FIG. 6 and FIG. 7, and the first direction is a front-rear direction as shown in FIG. 6 and FIG. 7. In the up-down direction, the two battery units has the same height. An upper end surface of the first battery units 101 is flush with an upper end surface of the second battery units 102, and a lower end surface of the first battery units 101 is flush with a lower end surface of the second battery units 102. The plurality of first battery units 101 and the plurality of second battery units 102 are arranged alternately in the front-rear direction. In this way, the plurality of battery units in the battery 2000 are arranged at an equal level, which can fully utilize the space in the battery 2000, is beneficial to an improvement in the energy density of the battery 2000.

As shown in FIG. 7, the first battery unit 101 has the same height as the second battery unit 102, and the first battery unit 101 and the second battery unit 102 each include one battery cell 100. The battery cell 100 in the first battery unit 101 has one electrode assembly 20, and the battery cell 100 in the second battery unit 102 has two electrode assemblies 20. The two electrode assemblies 20 have a same structural size and are connected to each other through the tabs 22. A height of the electrode assembly 20 in the first battery unit 101 is greater than or equal to a height of each of the two electrode assemblies 20 in the second battery unit 102. Therefore, the center lines of the main portions 21 in the two adjacent battery units are offset, so that the dispersion of the expansion force is realized, and the problem of poor performance of the battery 2000 caused by the concentration of the expansion force is reduced.

As shown in FIG. 5 to FIG. 8, in some embodiments, a number of the at least one battery cell 100 in the plurality of first battery units 101 is different from a number of the at least one battery cell 100 in the plurality of second battery units 102.

In some examples, the first battery unit 101 includes two battery cells 100, and the second battery unit 102 includes three battery cells 100. In another example, the first battery unit 101 includes one battery cell 100, and the second battery unit 102 includes three battery cells 100. In yet another example, the first battery unit 101 includes two battery cells 100, and the second battery unit 102 includes three battery cells 100. By providing different numbers of battery cells 100 in the two battery cells, it is beneficial to realize the misalignment of the center lines of the main portions 21 of the electrode assembly 20, thereby relieving the concentration of the expansion force on the same position of the battery 2000, improving the performance and structural stability of the battery 2000, and further prolonging the service life of the battery 2000.

As shown in FIG. 5, in some embodiments, each of the plurality of first battery units 101 includes one battery cell 100, and each of the plurality of second battery units 102 includes a plurality of battery cells 100 arranged in the second direction. The second direction is perpendicular to the first direction.

The second direction is an up-down direction as shown in FIG. 5, and the first direction is a front-rear direction as shown in FIG. 5. As shown in FIG. 5, the second battery unit 102 includes two battery cells 100, and the two battery cells 100 are arranged in the up-down direction. Certainly, the second battery unit 102 may also include three or more battery cells 100, and the plurality of battery cells 100 are arranged in the up-down direction.

Therefore, the first battery unit 101 is provided with one battery cell 100, and the second battery unit 102 is provided with the plurality of battery cells 100, so that the center lines of the main portions 21 of the adjacent battery cells 100 are offset, which realizes the dispersion of the expansion force and reduces the concentration of the expansion force in the same position. Meanwhile, only one battery cell 100 is provided in the first battery unit 101, so that the number of the battery cells 100 is further reduced, and assembly is facilitated.

In some embodiments, the second battery unit 102 includes two battery cells 100, and heights of the two battery cells 100 in the second direction are different.

That is, the second battery unit 102 is formed by two battery cells 100, and the first battery unit 101 is formed by one battery cell 100, so that the misalignment of the center lines of the main portions 21 of the two adjacent battery cells 100 in the two battery units can be achieved, and an expansion amount of a middle part of the two battery units is further reduced, thereby being able to effectively reduce the overall expansion amount of the battery 2000, enabling the overall expansion force inside the battery 2000 to be more uniform. Meanwhile, on the basis of a reduction in the number of the battery cells 100, an electrical connection of each battery cell 100 can be facilitated, so that assembly convenience and stability are improved.

As shown in FIG. 6, in some embodiments, each of the plurality of first battery units 101 includes a first battery cell 11, and each of the plurality of second battery units 102 includes two second battery cells 12. A height of the first battery cell 101 is twice heights of each of the two second battery cells 12 in the second direction.

A position where the first battery cell 11 has a maximum expansion force is located in the middle of the first battery cell 11, and a position where the first battery cell 11 has a minimum expansion force is located at two ends of the first battery cell 11. A position where the second battery cell 12 has a maximum expansion force is located in the middle of the second battery cell 12, and a position where the second battery cell 12 has a minimum expansion force is located at two ends of the second battery cell 12. By arranging the height of the first battery cell 101 as twice the height of the second battery cell 12, the position where the first battery cell 11 has the maximum expansion force corresponds to the position where the second battery cell 12 has the minimum expansion force. In this way, the expansion force of the plurality of battery units after the superposition of the plurality of battery units is reduced as much as possible, which can effectively reduce the expansion force in the middle of the battery 2000 and lower an overall deformation and expansion amount of the battery 2000. Meanwhile, the position where the first battery cell 11 has the minimum expansion force may also correspond to the position where the second battery cell 12 has the minimum expansion force, so that a deformation amount at the end of the battery unit is small. Since the electrode terminal 30 is connected to the electric connection member 500, by reducing the deformation amount at the end of the battery unit, the stretching of the electric connection member 500 can be reduced, thereby improving the reliability of the connection.

In addition, the second battery unit 102 includes two same battery cells 100, which can further reduce the type of the battery cell 100, and facilitate the assembly of the battery cell 100. Meanwhile, the height of the first battery cell 11 is twice the height of the second battery cell 12, so that the heights of the two battery cells are the same, i.e., the plurality of battery cells in the battery 2000 are arranged at an equal level, thereby being beneficial to an improvement in the energy density of the battery 2000.

In some embodiments, each of the plurality of first battery units 101 includes a battery cell 100, and each of the plurality of second battery units 102 includes two battery cells 100. An electrode terminal 30 of a battery cell 100 of the two battery cells 100 of the plurality of second battery units 102 is located at an end of the battery cell 100 away from the other battery cell 100 of the two battery cells 100 of the plurality of second battery units 102.

As shown in FIG. 6, the second battery unit 102 includes two second battery cells 12. The two second battery cells 12 are arranged in the up-down direction. An electrode terminal 30 of the second battery cell 12 located above is located at an upper end of the second battery cell 12, and an electrode terminal 30 of the second battery cell 12 located below may be located at a lower end of the second battery cell 12. In this way, a lower end surface of the upper second battery cell 12 can abut against an upper end surface of the lower second battery cell 12, which can improve stability of the matching position. Meanwhile, it is possible to reduce the space between the upper second battery cell 12 and the lower second battery cell 12, reduce the waste of the space in the battery 2000, and facilitate an improvement in the energy density of the battery 2000.

In some embodiments, the two battery cells 100 of the plurality of second battery units 102 are bonded to each other.

As shown in FIG. 6, the lower end surface of the upper second battery cell 12 may be bonded to the upper end surface of the lower second battery cell 12. Therefore, the stability of the two battery cells 100 can be improved, and a space occupying an interior of the battery 2000 is small, which is beneficial to an improvement in the energy density of the battery 2000.

In another embodiment, in the two battery cells 100 of the second battery unit 102, the electrode terminal 30 of each battery cell 100 is located at the upper end of the battery cell 100, and the electrode terminal 30 at the upper end of the lower second battery cell 102 may be connected to the electric connection member 500 through a lead-out structure.

In yet another embodiment, in the two battery cells 100 of the second battery unit 102, the electrode terminal 30 of each battery cell 100 is located at the two ends of the battery cell 100, i.e., the positive electrode terminal and the negative electrode terminal are located at the upper end and the lower end of the battery cell 100, respectively. The electrode terminal 30 at the lower end of the upper second battery unit 102 is welded to the electrode terminal 30 at the upper end of the lower second battery cell 102, so that the two battery cells 100 are connected to each other through the electrode terminal 30. The second battery units 102 only need to be electrically connected at two ends of the battery cell 100 on the basis of an improvement in the reliability of the connection of the two battery cells 100, thereby facilitating a connection between the second battery unit 102 and the electric connection member and improving the convenience of assembly.

As shown in FIG. 5 to FIG. 7, in some embodiments, an electrode terminal 30 of a battery cell 100 of a first battery unit 101 of the plurality of first battery units 101 is arranged at an end surface of the first battery unit 101 in the second direction.

The two electrode terminals 30 of the first battery unit 101 may be located on the same end surface, and the two electrode terminals 30 of the first battery unit 101 may also be located on the two end surfaces, respectively. By arranging the electrode terminal 30 of the first battery unit 101 on the end surface, it is beneficial to an electrical connection of the first battery unit 101, even if a connection between the electrode terminal 30 and the electric connection member 500.

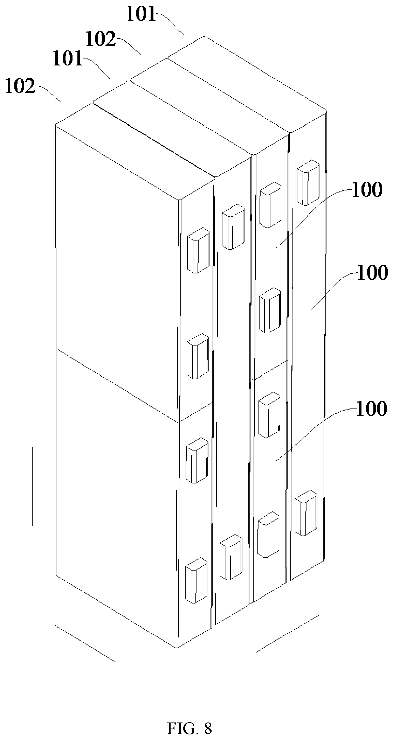

As shown in FIG. 8, in some embodiments, an electrode terminal 30 of the at least one battery cell 100 of a first battery unit 101 of the plurality of first battery units 101 is arranged at a side surface of the first battery unit 101 in the second direction, an electrode terminal 30 of the at least one battery cell 100 of a second battery unit 102 of the plurality of second battery units 102 is arranged at a side surface of the second battery unit 102 in the second direction, and the electrode terminal 30 of the first battery unit 101 and the electrode terminal 30 of the second battery unit 102 are located at a same side. The second direction is perpendicular to the first direction.

The second direction is an up-down direction as shown in FIG. 8, and the first direction is a front-rear direction as shown in FIG. 8. As shown in FIG. 8, the two battery units are arranged alternately in the front-rear direction, and the up-down direction may be formed as a height direction of the battery cell. Two surfaces in a left-right direction are formed as side surfaces of the battery unit. The structure of each battery unit 100 is shown in FIG. 4. The electrode terminal 30 is located at a right side surface of the battery unit 100. The electrode terminal 30 of each battery cell 100 is arranged at the side surface, and the electrode terminals 30 of the plurality of battery units are located at the same side surface, thereby facilitating the connection between the electrode terminals 30 and the electric connection member, which only occupies one side space to improve the energy density of the battery 2000.

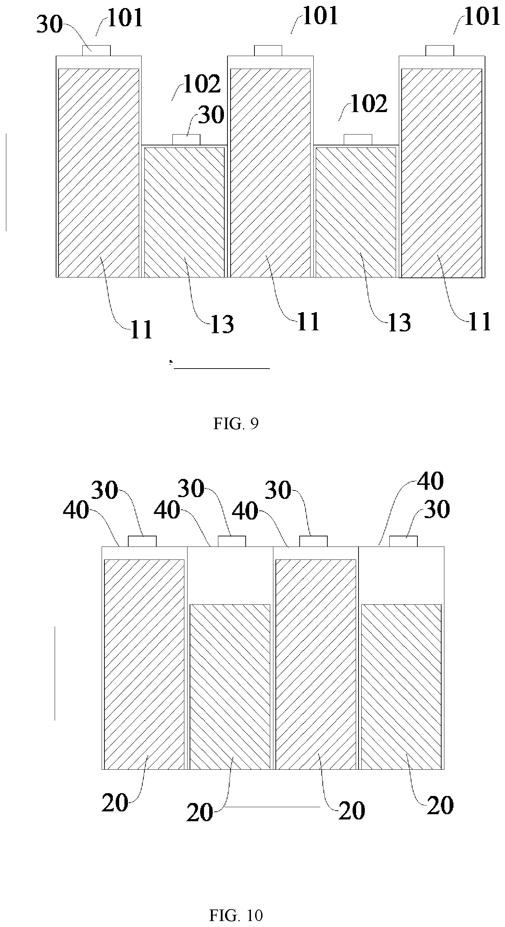

As shown in FIG. 9, in some embodiments, each of the plurality of first battery units 101 includes one first battery cell 11, and each of the plurality of second battery units 102 includes one third battery cell 13. A height of the one first battery cell 11 is greater than a height of the one third battery cell 13.

That is, each battery unit includes one battery cell 100. Since the heights of the two battery cells 100 are different, the misalignment of centers of the main portions 21 of the two adjacent battery cells 100 is realized, which realizes the dispersion of the expansion force and reduce the case where the expansion force is concentrated in the same position. Meanwhile, each battery unit is provided with only one battery cell 100, which further reduces the number of battery cells 100 and facilitates assembly.

As shown in FIG. 9, in some embodiments, in a direction in which the plurality of first battery units 101 and the plurality of second battery units 102 are arranged, battery cells 100 at two ends are the same and are first battery cells 11.

The first battery unit 101 and the second battery unit 102 are arranged in the front-rear direction. As shown in FIG. 9, the height of the first battery cell 11 is greater than a height of the third battery cell 13, and the battery cells at a front end and a rear end are each the first battery cells 11. By arranging the first battery cell 11 with a large height at the two ends in the direction in which the plurality of first battery cells 11 and the plurality of second battery cells 12 are arranged, the fixing of the plurality of battery units can be facilitated, thereby improving the assembly stability of the plurality of battery units.

As shown in FIG. 10, in some embodiments, each of the plurality of battery cells 100 includes a housing 40. The electrode assembly 20 is arranged in the housing 40. Housings of the two adjacent battery cells of the plurality of battery cells have a same size, and electrode assemblies of the two adjacent battery cells have different heights.

In some embodiments, the plurality of battery cells 100 have a same capacity.

As shown in FIG. 6, a capacity of the first battery cell 11 is the same as a capacity of the second battery cell 12. As shown in FIG. 9, the capacity of the first battery cell 11 is the same as a capacity of the third battery cell 13.

In some embodiments, a center line of a main portion 21 of the electrode assembly 20 extends in a direction in which the plurality of battery cells 100 are arranged.

As shown in FIG. , the plurality of battery cells 100 are arranged in the front-rear direction, and the center line n of the main portion 21 of the electrode assembly 20 extends in the front-rear direction, so that the center lines of the main portions 21 of the two adjacent battery cells 100 are offset in the direction in which the battery cells 100 are arranged, which enables parts of the two adjacent battery cells 100 with great expansion amount in the direction in which the battery cells 100 are arranged are offset. Further, the concentration of the expansion force caused by the superposition of the plurality of battery cells 100 is relieved, the expansion of the battery 2000 during its charging and discharging is reduced, potential safety hazards caused by compression of the battery case body are reduced, and the safety performance of the battery 2000 is improved.

It can be understood that, although the heights of the plurality of battery cells 11 (such as sizes in the up-down direction in FIG. 5) are different, by changing a thickness of the battery cell 11 (such as a size in the front-rear direction in FIG. 5) or changing a width of the battery cell 11 (such as a size in the left-right direction in FIG. 5) or using electrode assemblies 20 in different systems, the plurality of battery cells 100 may have the same capacity and a same electric quantity, thereby facilitating performing charging and discharging control on the battery cells 100, reducing a complexity degree of the control system, and lowering a manufacturing cost.

The electric device according to an embodiment of a second aspect of the present disclosure includes the battery 1000 according to the embodiments of the first aspect of the present disclosure. The battery 1000 is configured to supply power to the electric device. Therefore, by using the battery 1000 described above, it is beneficial to an improvement in use safety and reliability of the electric device.

Finally, it should be noted that each of the above embodiments is used only to illustrate, rather than to limit, the technical solutions of the present disclosure. Although the present disclosure has been described in detail with reference to the foregoing embodiments, it is conceivable for those skilled in the art that modifications can be made to the technical solutions described in the foregoing embodiments, or equivalent replacements can be made to some or all of the technical features in the technical solutions described in the foregoing embodiments. These modifications or equivalent replacements, which do not depart the essence of corresponding technical solutions from the scope of the technical solutions of the embodiments of the present disclosure, shall fall within the scope of the claims and the specification of the present disclosure. In particular, the technical features mentioned in individual embodiments can be combined arbitrarily without any structural conflict. The present disclosure is not limited to the particular embodiments disclosed herein, and includes all technical solutions falling within the scope of the claims.

## Claims

1. A battery, comprising:
a plurality of battery cells, each of the plurality of battery cells having an electrode assembly comprising a main portion and a tab, and center lines of main portions of two adjacent battery cells of the plurality of battery cells being offset.

2. The battery according to claim 1, wherein a center line of the main portion of each of the plurality of battery cells is perpendicular to a surface with a largest area of the electrode assembly.

3. The battery according to claim 1 or 2, comprising a plurality of first battery units and a plurality of second battery units, the plurality of first battery units and the plurality of second battery units being arranged alternately in a first direction, each of the plurality of first battery units comprising at least one battery cell, and each of the plurality of second battery units comprising at least one battery cell,
wherein a center line of a main portion of the at least one battery cell in each of the plurality of first battery units and a center line of a main portion of the at least one battery cell in each of the plurality of second battery units are offset.

4. The battery according to claim 3, wherein:
in a second direction, each of the plurality of first battery units has a same height as each of the plurality of second battery units; and
end surfaces of the plurality of first battery units are flush with end surfaces of the plurality of second battery units, the second direction being perpendicular to the first direction.

5. The battery according to claim 3 or 4, wherein a number of the at least one battery cell in the plurality of first battery units is different from a number of the at least one battery cell in the plurality of second battery units.

6. The battery according to claim 5, wherein:
each of the plurality of first battery units comprises one battery cell; and
each of the plurality of second battery units comprises a plurality of battery cells arranged in a second direction, the second direction being perpendicular to the first direction.

7. The battery according to claim 6, wherein:
each of the plurality of first battery units comprises one first battery cell; and
each of the plurality of second battery units comprises two second battery cells, a height of the first battery cell being twice a height of each of the two second battery cells in the second direction.

8. The battery according to claim 6 or 7, wherein:
each of the plurality of first battery units comprises one battery cell; and
each of the plurality of second battery units comprises two battery cells, an electrode terminal of one battery cell of the two battery cells being located at an end of the one battery cell away from the other battery cell of the two battery cells.

9. The battery according to claim 8, wherein the two battery cells of each of the plurality of second battery units are bonded to each other.

10. The battery according to any one of claims 6 to 9, wherein an electrode terminal of the battery cell of each of the plurality of first battery units is arranged at an end surface of the first battery unit in the second direction.

11. The battery according to any one of claims 3 to 7, wherein:
an electrode terminal of the at least one battery cell of each of the plurality of first battery units is arranged at a side surface of the first battery unit in the second direction;
an electrode terminal of the at least one battery cell of each of the plurality of second battery units is arranged at a side surface of the second battery unit in the second direction; and
the electrode terminal of the first battery unit and the electrode terminal of the second battery unit are located at a same side, the second direction being perpendicular to the first direction.

12. The battery according to claim 3, wherein:
each of the plurality of first battery units comprises one first battery cell; and
each of the plurality of second battery units comprises one third battery cell, the first battery cell having a greater height than the third battery cell.

13. The battery according to any one of claims 4 to 12, wherein in a direction in which the plurality of first battery units and the plurality of second battery units are arranged, battery cells located at two ends are the same and are each the first battery cell.

14. The battery according to claim 1, wherein each of the plurality of battery cells comprises a housing, the electrode assembly being disposed in the housing, housings of the two adjacent battery cells of the plurality of battery cells have a same size, and electrode assemblies of the two adjacent battery cells having different heights.

15. The battery according to any one of claims 1 to 14, wherein the plurality of battery cells have a same capacity.

16. The battery according to any one of claims 1 to 15, wherein a center line of the main portion of the electrode assembly extends in a direction in which the plurality of battery cells is arranged.

17. An electric device, comprising the battery according to any one of claims 1 to 16, the battery being configured to supply power.
